# DEMANDE DE BREVET EUROPEEN

(11) **EP 3 932 548 A1**
(43) Date de publication de la demande: **05.01.2022**
(21) Numéro de dépôt: 20183320.9
(22) Date de dépôt: 30.06.2020
(51) Int. Cl.: B01J 35/00, B01J 21/06, B01J 37/03, C02F 1/30, C01B 3/22, C07C 33/00, B01J 37/34

(54) **PHOTO-CATALYSEUR À BASE DE TIO2, PROCÉDÉS DE PRÉPARATION DUDIT PHOTOCATALYSEUR ET SON UTILISATION POUR DÉGRADER UNE BIOMASSE**

(71) Demandeur: CY Cergy Paris Université, 95000 Cergy (FR); École Nationale Supérieure de Techniques Avancées, 91120 Palaiseau (FR); Commissariat à l'Énergie Atomique et aux Énergies Alternatives, 75015 Paris (FR); Centre National de la Recherche Scientifique, 75016 Paris (FR)
(72) Inventeur: PASTERNAK, Nicolas, 95450 Avernes (FR); LINDER, Nancy, 95000 Neuville sur Oise (FR); RISAL, Laura-Line, 91762 Palaiseau Cedex (FR); DESCHAMPS, Johnny, 91400 Orsay (FR)
(74) Mandataire: Demulsant, Xavier

(57) **Abrégé**

Procédé de préparation d'un support photocatalyseur biomasse avec des nanocristaux TiO₂/MₓO_{y}, de taille au moins nanométrique et actif en photocatalyse au moins dans le domaine du visible,
comprenant les sous-étapes suivantes :
a) préparation et chauffage d'une solution aqueuse d'acide chlorhydrique à un pH donné, compris entre 0 et 6, et à une température comprise entre 20 et 60°C, sans tensioactif,
b) ajout du précurseur d'oxyde de titane, ou du mélange du précurseur d'oxyde de titane TiO₂ et d'au moins un autre précurseur d'un autre oxyde MₓO_{y}, composé de 80 à 100 % en moles de TiO₂ et de 0% à 20 % en moles d'un autre oxyde métallique ou semi-métallique MₓO_{y}, à la solution aqueuse acide, un précipité se formant alors, et agitation du milieu réactionnel aqueux acide, de façon à dissoudre le précipité ;
c) une étape d'immersion du support dans le milieu réactionnel aqueux acide,
d) une étape de chauffage du milieu réactionnel aqueux acide,
le support permettant de faire cristalliser les précurseurs d'oxyde de titane, ou du mélange du précurseur d'oxyde de titane et d'au moins un autre précurseur de l'autre oxyde métallique ou semi-métallique,
e) une éventuelle étape de rinçage à l'eau et une étape de récupération du support biomasse avec les nanocristaux TiO₂/ MₓO_{y}, accrochés par liaisons covalentes au support biomasse.

## Description

L'invention se rapporte au domaine technique de la photocatalyse.

La photocatalyse est un procédé d'oxydation permettant la production d'espèces oxydantes, en particulier de radicaux, par irradiation à des longueurs d'onde correspondant à des énergies supérieures à celle de l'énergie de bande interdite de certains solides semi-conducteurs, en présence d'eau et de dioxygène.

La photocatalyse met en jeu un photocatalyseur, c'est-à-dire un catalyseur activé par l'énergie lumineuse et dont l'eau et l'oxygène de l'air sont les oxydants. Le photocatalyseur permet d'accélérer la vitesse d'une réaction chimique, sans être finalement consommé. C'est généralement un semi-conducteur appartenant aux chalcogénures de type oxyde (TiO₂, ZnO) ou sulfure (CdS, ZnS).

La photocatalyse est employée actuellement à l'échelle industrielle dans le cadre de la production de surfaces actives, de revêtements et matériaux auto-nettoyants, d'auto-désinfectants ou encore d'agents épurants.

La photocatalyse est également proposée dans le traitement de l'eau. D'autres applications potentielles existent, comme la fonctionnalisation de surfaces (agent de surface) ou encore la production d'hydrogène. Une revue des procédés proposés pour la production photocatalytique d'hydrogène à partir de biomasse a été présentée en 2016 par Puga, Photocatalytic production of hydrogen from biomass-derived feedstocks, Coordination Chemistry Reviews 315, pages 1-66, 2016*.* Une courte revue des procédés proposés pour la production photocatalytique d'hydrogène à partir de produits lignocellulosiques (notamment bois, sciure, herbe, bagasse, algues) a été présentée en 2018 par Kuehnel, Solar hydrogen generationfrom lignocellulose, Andew Chem Int 57, 2018, pages 3290-3296*.*

L'invention se rapporte plus particulièrement à la photocatalyse hétérogène, le photocatalyseur étant en phase solide et les réactifs étant en phase gazeuse ou aqueuse.

Que ce soit en phase gazeuse ou aqueuse, la photocatalyse hétérogène est composée de cinq étapes : la migration des molécules réactives dispersées dans le fluide vers la surface du catalyseur ; l'adsorption des molécules réactives sur la surface du catalyseur ; la réaction sur la surface de la phase adsorbée ; la désorption des produits de réaction ; l'éloignement des produits de l'interface fluide/catalyseur.

La réaction photocatalytique repose sur l'absorption par le photocatalyseur de photons d'énergie supérieure ou égale à l'énergie de sa bande interdite.

Le photocatalyseur le plus utilisé à ce jour est le dioxyde de titane (TiO₂).

Il existe onze structures cristallines pour le dioxyde de titane, dont sept sont stables à température et pression ambiante. Dans la nature, le dioxyde de titane se présente principalement sous forme d'anatase et de rutile, et plus rarement sous forme de brookite ou TiO₂(B).

Le dioxyde de titane est synthétisé le plus souvent sous la forme anatase, ou sous la forme rutile, et beaucoup plus rarement sous forme de brookite. Il existe d'autres formes plus difficiles à synthétiser, ainsi que différents sous-oxydes TiO₂₋ₓ, ou sur-oxydes TiO₂₊ₓ. Le dioxyde de titane peut être synthétisé par voie physique, par exemple par pulvérisation cathodique, ou par diverses voies de synthèse chimique, par exemple par pyrolyse, anodisation électrochimique, synthèse hydrothermale, thermohydrolyse, procédé sol-gel, ou par microémulsions, micelles ou micelles inverses.

Le matériau photocatalytique de référence dans la plupart des études réalisées en laboratoire est commercialisé par la société Evonik-Degussa sous l'appellation Aeroxide TiOP25 (auparavant Degussa P25). Ce produit est constitué d'un mélange d'environ 80% d'anatase et de 20% de rutile pour les phases cristallisées et d'une faible fraction de TiO sous forme amorphe. La structure exacte de ce produit Aeroxide est discutée, voir par exemple Jiang et al, Anatase and rutile in evonik aeroxide P25 : heterojunctioned or individual nanoparticles ?, Catalysis today, Vol 300, février 2018, pages 12-17*.* Pour une caractérisation quantitative de ce produit Evonik Aeroxide P25, on peut se reporter par exemple au document Tobaldi et al, Fully quantitative X-ray characterisation of Evonik Aeroxide TiO2 P25, Materials Letters, May 2014, Vol 122, 345-347*.*

L'anatase possède une largeur de bande interdite de 3,23 eV. L'activité de l'anatase est ainsi limitée aux longueurs d'ondes inférieures à la largeur de la bande interdite, soit λ<387 nm. Le rutile possède une largeur de bande interdite de 3,02 eV. L'activité du rutile est ainsi limitée aux longueurs d'ondes inférieures à la largeur de la bande interdite, soit λ<411 nm. Ces valeurs de gap peuvent être légèrement modulées selon la taille du matériau, par effet de confinement quantique, ou encore par dopage au moyen d'ions ou de nano-particules métalliques.

Dans ses formes commerciales les plus courantes, le TiO₂ est donc majoritairement activé par les ultraviolets, le rutile absorbant aussi une petite partie du spectre visible. Les gammes de longueurs d'ondes utiles pour le rutile et l'anatase ne correspondent qu'à environ 6% du rayonnement solaire reçu sur la Terre, contre environ 50% pour le domaine du visible.

De nombreux travaux ont été réalisés pour élargir l'efficacité du dioxyde de titane en lumière visible.

Dans une première approche, un dioxyde de titane noir fut obtenu. Ces matériaux découverts en 2011 auraient une largeur de bande interdite de 1,54 eV, permettant la photocatalyse dans le proche infrarouge. Une revue des procédés envisagés est présentée dans le document Ullattil et al, Black TiO2 nanomaterials : a review of recent advances, Chemical Engineering Journal 343 (2018), pages 708-736*.* Une autre revue des procédés de synthèse de dioxyde de titane noir est présentée en 2020 par Rajaraman et al, Black TiO2 : a review of its properties and conflicting trends, Chemical Engineering Journal Vol 389, 2020*.* Les procédés à mettre en œuvre pour la production de dioxyde de titane noir sont complexes et couteux en énergie, notamment l'hydrogénation à haute pression et haute température, le traitement plasma, l'implantation ionique.

Dans une deuxième approche, le dioxyde de titane est dopé. Une revue des principaux dopants utilisés a été présentée en 2019 par Kumaravel et al, Photocatalytic hydrogen production using metal doped TiO2 : a review of recent advances, Applied Catalysis B : Environmental vol 244, 2019, pages 1031-1064*.* Selon cette revue, les dopants du TiO₂ les plus étudiés pour augmenter la production d'hydrogène par photocatalyse sont l'azote, le cuivre, l'or et le platine, ainsi que le nickel, le palladium, le titane, et le bismuth, d'autres dopants étant plus rarement proposés (béryllium, magnésium, strontium, baryum, niobium, chrome, manganèse, fer, ruthénium, cobalt, rhénium, argent, bore, indium, carbone, étain, soufre, fluor, chlore, brome, néodyme, europium). Dans la plupart des essais mentionnés dans cette revue, la source de lumière est une lampe xénon ou une source ultraviolette. Le dopage du dioxyde de titane entraine des couts importants, en particulier lorsque le dopant est un métal noble, ou un lanthanide.

Dans une troisième approche, le dioxyde de titane est sensibilisé. Trois types de sensibilisation peuvent être identifiés : l'hétérojonction avec un semi-conducteur, l'effet plasmon, et le contact avec un composé conjugué.

Pour l'hétérojonction avec un semi-conducteur, les matériaux les plus utilisés sont les oxydes ZnO, NiO, Cu₂O, SnO₂, RuO₂ ZrO₂ Bi₂O₃, WO₃, Fe₂O₃, V₂O₅, Ag₃PO₄, et également CdS, Ag₂S, MoS₂, Bi₂S₃, CdSe, AgCl, AgBr, AgI, C₃N₄.

Pour l'effet plasmon, la structure anatase est associée à des nanoparticules de métal noble, tel que : or, argent, palladium, ou platine.

La sensibilisation par un composé conjugué, dénommée *dye sensitization,* utilise des complexes de métaux de transition tel que ruthénium, ou fer, ou bien encore du carbone graphitique, ou du graphène, des composés aromatiques tels polythiophènes, polyaninile, ou des polymères tels que polyvinyl alcool. Ces composés conjugués sont le plus souvent liés au dioxyde de titane par des liaisons covalentes, mais peuvent aussi être liés par liaison hydrogène, interactions électrostatiques ou Van der Waals.

La sensibilisation du dioxyde de titane entraine des coûts importants, en particulier lorsque le semi-conducteur utilisé est à base de métal noble, ou lorsqu'un métal noble tel que l'or, le palladium ou le platine est utilisé pour obtenir un effet plasmon. La sensibilisation par un composé conjugué entraine également des coûts élevés et nécessite un certain savoir-faire, notamment pour la fabrication de graphène.

La photocatalyse à l'aide de dioxyde de titane est largement proposée dans le domaine du traitement des effluents, notamment du traitement des eaux.

Compte tenu des risques potentiels que pourrait présenter le dioxyde de titane sous sa forme nanométrique pour la santé, diverses techniques ont été proposées pour maintenir le dioxyde de titane sur un support, ou pour assurer le recyclage du dioxyde de titane. La séparation des particules fines de dioxyde de titane par ultrafiltration entraine en effet des coûts très élevés. Différents supports ont été proposés pour la fixation du dioxyde de titane TiO₂ déjà synthétisé au préalable par ailleurs : verre, céramique, minéral argileux (tel que par exemple sépiolite, attapulgite, vermiculite), zéolite, plaque métallique, acétate de cellulose, mousse de titane, diatomite, charbon actif, nanotubes de carbone, graphène, fullerène. La fixation peut être effectuée par divers procédés, notamment anodisation, procédé sol gel ou pulvérisation.

Une revue des procédés de fixation du TiO₂ sur substrat argileux a été présentée en 2018 par Mishra et al, Clay supported TiO2 nanoparticles for photocatalytic degradation of environmental pollutants : a review, Journal of Environmental Chemical Engineering, vol 6, issue 5, 2018, pages 6088-6107*.*

La fixation du TiO₂ sur charbon actif est conventionnellement proposée conjointement à la fabrication de charbon actif à partir de biomasse, en particulier de sous-produits lignocellulosiques des industries agricoles et agroalimentaires. Les particules de TiO₂ peuvent être fixées sur le charbon actif par voie sol gel, par dépôt en phase vapeur, ou encore par imprégnation du charbon actif par des suspensions de nanoparticules de TiO₂.

L'un des inconvénients majeurs de la fixation du dioxyde de titane sur un support est la forte réduction de l'activité photocatalytique, par rapport au TiO₂ dispersé.

La fixation du dioxyde de titane TiO₂ sur des substrats végétaux a été proposée, notamment fibres de coton, feuilles de thé, feuille de fougère, fibres de kapok, fibres de bambou. Dans la plupart des procédés proposés, le substrat végétal sert de support (*biotemplate*) et les particules de TiO₂ sont obtenues par calcination, pyrolyse, ou traitement thermique transformant le substrat végétal en carbone.

Le document Djellabi et al, Sustainable and easy recoverable magnetic TiO2 lignocellulosic biomass@Fe3O4 for solar photocatalytic water remediation, Journal of Cleaner Production Juil. 2019, 233, pp 841-847*,* indique que l'hybridisation du dioxyde de titane TiO₂ avec la biomasse lignocellulosique, permet de réduire la bande interdite du dioxyde de titane par le développement de liaisons Ti-O-C, permettant d'obtenir une activité photocatalytique pour un rayonnement dans le visible (lampe xenon 300 W avec filtre UV). Dans ce document, il est employé un procédé de synthèse sol gel assisté par ultrasons à 500°C qui est très énergivore. De plus, une telle température de synthèse peut être agressive pour la biomasse et provoquer sa décomposition. L'analyse structurale DRX ne montre aucune trace de cellulose, qui devrait apparaitre vers 2 theta égal à 22 degrés.

Le document Xue et al, Visible light-assisted efficient degradation of dye pollutants with biomass-supported TiO2 hybrids, Materials Science & Engineering C 82, pages 197-203, 2018*,* décrit la fixation de particules de TiO*₂* sur de la bagasse de sucre, composée de cellulose, d'hémicellulose et de lignine, cette fixation étant présentée comme augmentant les propriétés photocatalytiques du TiO₂ dans le visible (Lampe halogène 500 W avec filtre UV). Dans ce document, la synthèse est basée sur un procédé complexe, long et énergivore reposant sur une technique de dialyse suivie d'une calcination entre 100°C et 400°C du matériau composite biomasse TiO₂ obtenu. Les caractérisations structurales des matériaux (DRX) montrent clairement qu'au-delà de 200 °C, la calcination conduit à la décomposition de la biomasse.

### Invention

Un premier objet de l'invention est de proposer un procédé de dégradation de biomasse par photocatalyse, le photocatalyseur étant à base de dioxyde de titane, le procédé utilisant la lumière naturelle, sans risque de dissémination du dioxyde de titane dans l'environnement.

Un deuxième objet de l'invention est de proposer un procédé de dégradation de biomasse par photocatalyse, le photocatalyseur étant à base de dioxyde de titane, le procédé permettant entre autres la production de produits de décomposition valorisables, notamment de type alcool (isopropanol, méthanol, éthanol, glycérol) ou autres (notamment acétone, acide acétique).

Un troisième objet de l'invention est de proposer un procédé de dégradation de biomasse par photocatalyse, le photocatalyseur étant à base de dioxyde de titane, le procédé permettant la valorisation d'algues, de boues de station d'épuration, de sous-produits de l'industrie sylvicole tels que sciure de bois, ou de produits de l'industrie agroalimentaire tels que sorbitol, ou glucose.

Un autre objet de l'invention est de proposer un procédé répondant à au moins un des objets ci-dessus et permettant la dégradation de la biomasse sous forme solide ou en solution aqueuse.

Un autre objet de l'invention est de proposer un procédé répondant à au moins un des objets ci-dessus, le procédé étant intégré in-situ, toutes les étapes du procédé pouvant être réalisées sur un seul site.

Un autre objet de l'invention est de proposer un procédé répondant à un moins un des objets ci-dessus, le procédé n'utilisant pas de solvant.

Un autre objet de l'invention est de proposer un procédé répondant à au moins un des objets ci-dessus, le procédé utilisant un dioxyde de titane sensibilisé avec un oxyde métallique de type MₓO_{y}.

A ces fins, l'invention se rapporte, selon un premier aspect, à un procédé de préparation d'un support photocatalyseur biomasse avec des nanocristaux TiO₂/MₓO_{y}, de taille au moins nanométrique et actif en photocatalyse au moins dans le domaine du visible (et donc actif en UV ou autre rayonnement), comprenant les sous-étapes suivantes :
a) préparation et chauffage d'une solution aqueuse d'acide chlorhydrique à un pH donné, compris entre 0 et 6, et à une température comprise entre 20°C et 60°C, sans tensioactif ;
b) ajout à la solution aqueuse acide d'un précurseur d'oxyde de titane, ou d'un mélange d'un précurseur d'oxyde de titane TiO₂ et d'au moins un autre précurseur d'un autre oxyde MₓO_{y}, composé de 80 % à 100 % en moles de TiO₂ et de 0% à 20 % en moles d'un autre oxyde métallique ou semi-métallique MₓO_{y}, un précipité se formant alors, et agitation du milieu réactionnel aqueux acide obtenu, de façon à dissoudre le précipité ;
c) immersion d'un support biomasse dans le milieu réactionnel aqueux acide pour condenser les précurseurs du milieu réactionnel aqueux acide sur sa surface, ou pulvérisation du milieu réactionnel aqueux acide sur le support biomasse, les nanocristaux étant réalisés au moment où le support biomasse va être mis en contact avec le milieu réactionnel aqueux acide (le procédé ne mettant avantageusement pas en œuvre la technique dite de « spin coating ») ;
d) chauffage du milieu réactionnel aqueux acide ;
   le support biomasse permettant de faire cristalliser les précurseurs d'oxyde de titane, ou du mélange d'un précurseur d'oxyde de titane et d'au moins un autre précurseur de l'autre oxyde métallique ou semi-métallique, directement à sa surface, les nanocristaux étant avantageusement directement réalisés à la surface du support biomasse ;
e) une éventuelle étape de rinçage à l'eau et une étape de récupération du support biomasse avec les nanocristaux TiO₂/ MₓO_{y}, accrochés (greffés) par liaisons covalentes au support biomasse.

L'étape de chauffage du milieu réactionnel peut présenter deux sous-étapes :
- une première sous étape de chauffage à une température comprise entre 30°C et 60°C, pendant une première durée donnée ;
- une deuxième sous étape de chauffage à une température comprise entre 50°C et 90°C, pendant une deuxième durée donnée.

Par exemple, pour la première sous étape de chauffage, la première durée donnée peut être de plusieurs heures. Par exemple, pour la deuxième sous étape de chauffage, la deuxième durée donnée peut être de plusieurs heures.

Selon diverses mises en œuvre, le précurseur de titane est choisi parmi le groupe comprenant l'isopropoxyde de titane, le titanate de sodium Na₂Ti₃O₇ ou un dérivé.

Selon diverses mises en œuvre, l'oxyde métallique est choisi parmi le groupe comprenant SiO₂, ZrO₂, Al₂O₃, Fe₂O₃, CeO₂, MgO, CuO, NiO, Cu₂O, SnO₂, RuO₂Bi₂O₃, WO₃, V₂O₅, Ag₃PO₄. Avantageusement, les étapes du procédé sont réalisées à l'air libre, sans aucun co-solvant.

Avantageusement, l'invention permet de réaliser des supports actifs en photocatalyse en incorporant des matériaux à base d'oxyde de titane dans des conditions douces (sans surfactant, milieu aqueux, nécessitant peu d'énergie, sans températures excessive),

Dans certaines mises en œuvre, dans l'étape a), le pH est choisi égal à 5, de façon à obtenir des nanocristaux sur le support biomasse ayant une forme cristalline brookite stable.

Dans d'autres mises en œuvre, dans l'étape a), le pH est entre 0 et 2, de façon à obtenir des nanocristaux sur le support biomasse ayant une forme cristalline rutile.

Dans certaines mises en œuvre, la première étape a) d'ajout d'un précurseur de titane est réalisée avec ajout d'un oxyde métallique WO₃, le pH du milieu réactionnel étant compris entre 0 et 5.

Dans certaines mises en œuvre, l'étape de chauffage du milieu réactionnel aqueux acide comprenant le support biomasse est réalisé entre 30°C et 100°C.

Dans la présente invention, les précurseurs de TiO₂ sont formés après une première formation de précipité que l'on agite fortement afin de le dissoudre dans le milieu. Ensuite, dans ce milieu, les précurseurs de TiO₂ s'accrochent au support sur sa surface, sur ou à l'intérieur, et ne cristallisent que sur la surface du support dans une seule étape. En d'autres termes, dans la présente invention, les précurseurs de TiO₂ cristallisent et s'accroissent après accrochage sur le support.

L'agitation du milieu réactionnel aqueux acide peut être effectuée jusqu'à la disparition du précipité.

Dans certaines mises en œuvre, l'agitation du milieu réactionnel aqueux acide est effectuée entre 800 tr/min et 1200 tr/min.

L'invention se rapporte, selon un deuxième aspect, à un support photocatalyseur biomasse, actif en photocatalyse au moins dans le domaine du visible (par exemple lorsqu'une lampe halogène 500 W 8550 lumen est employée) et donc est actif aussi en UV ou tout autre rayonnement.

Le support photocatalyseur biomasse étant actif au moins dans le domaine du visible, c'est-à-dire avec un faible apport en énergie. Par conséquent, le support est aussi actif à la lumière UV qui possède une plus grande énergie, le support étant ainsi actif en lumière naturelle.

Le support photocatalyseur biomasse est de taille au moins nanométrique avec des nanocristaux TiO₂/ MₓO_{y} accrochés (greffés) à sa surface par des liaisons covalentes, réalisé par le procédé tel que présenté ci-dessus, ces nanocristaux étant composés de 80 % à 100 % en moles de TiO₂ et de 0% à 20 % en moles d'un autre oxyde métallique ou semi-métallique MₓO_{y}.

Dans certaines mises en œuvre, la biomasse est choisie dans le groupe comprenant le glucose, le sorbitol, la cellulose monocristalline.

Dans d'autres mises en œuvre, la biomasse est choisie parmi le groupe comprenant les algues, le bois (notamment pin broyé).

Avantageusement, le support est de taille micrométrique, millimétrique, centimétrique ou supérieure.

L'invention se rapporte, selon un autre aspect, à un procédé de dégradation de supports photocatalyseurs biomasse TiO₂/ MₓO_{y} à partir d'un premier support photocatalyseur biomasse réalisé selon le procédé présenté ci-dessus, le procédé de dégradation comprenant :
- une étape f) de dégradation photocatalytique, au moins dans le domaine du visible, du premier support photocatalyseur de biomasse avec des nanocristaux TiO₂/ MₓO_{y}, pour obtenir un résidu et des produits de décomposition ;
- une étape g) de traitement en solution aqueuse acide du résidu, pour obtenir une solution de photocatalyseur recyclée avec des nanoparticules TiO₂/ MₓO_{y} réactive pour le greffage, formant un nouveau milieu réactionnel aqueux acide ;
   les nanoparticules TiO₂/ MₓO_{y} réactives du résidu étant issues du premier support photocatalyseur biomasse dégradé en produits de décomposition ;
- une étape h) d'ajout à la solution de photocatalyseur recyclée, d'un nouveau support biomasse ;
- une étape i) de chauffage du nouveau milieu réactionnel aqueux acide ;
- une étape j) de séchage, pour former un nouveau support photocatalyseur biomasse avec des nanoparticules TiO₂/ MₓO_{y} accrochées (greffées) par liaison covalente en surface, le nouveau support photocatalyseur biomasse étant actif en photocatalyse au moins dans le domaine du visible.

Avantageusement, le nouveau support photocatalyseur biomasse avec nanoparticules TiO₂/ MₓO_{y} issu de l'étape j), subit et est dégradé lors d'une nouvelle étape f), le procédé de dégradation de la biomasse étant réalisé à nouveau dans des nouvelles étapes g) à j) pour obtenir un nouveau support photocatalyseur biomasse avec des nanoparticules TiO₂/ MₓO_{y} issues de l'étape j), qui est à nouveau dégradé lors d'une nouvelle étape f) et ainsi de suite, le procédé fonctionnant suivant un cycle permettant de récupérer les nanoparticules réactives TiO₂/ MₓO_{y} du résidu qui sont réactives pour le greffage, et qui sont accrochées (greffées) par liaisons covalentes à chaque nouveau support photocatalyseur biomasse ajouté dans le milieu réactionnel aqueux acide les contenant.

Avantageusement, l'étape f) de dégradation photocatalytique est réalisée en lumière naturelle. Avantageusement, l'étape de dégradation photocatalytique est réalisée par mise au contact avec l'oxygène de l'air, à pression atmosphérique.

Avantageusement, l'étape de dégradation photocatalytique est réalisée sous rayonnement visible (par exemple lampe halogène 500W, intensité lumineuse 8550 lumen), et encore plus particulièrement sous lumière naturelle.

Avantageusement, les produits de décomposition obtenus sont de type alcool. Avantageusement, les produits de décomposition sont choisis dans la liste suivante : acétone, isopropanol, méthanol, glycérol, acide acétique, glyoxal, éthanol.

Avantageusement, les produits de dégradation comprennent des biogaz tels que par exemple l'hydrogène et/ou le méthane.

Avantageusement, les produits de décomposition sont obtenus sans agitation de la solution aqueuse lors de l'étape f).

L'invention se rapporte, selon un autre aspect, à des nanoparticules TiO₂/MxOy réactives pour le greffage, et aptes à s'accrocher (se greffer) par liaisons covalentes à un support photocatalyseur pour le rendre actif en photocatalyse au moins dans le domaine du visible, issues du résidu obtenu par le procédé de dégradation présenté ci-dessus.

D'autres aspects et avantages de l'invention apparaîtront au cours de la description suivante de modes de réalisation, effectuée en référence aux dessins annexés dans lesquels :
- la figure 1 est un schéma représentant les étapes du procédé de dégradation de biomasse par un catalyseur à base de TiO₂, montrant le recyclage du résidu provenant de la photocatalyse ;
- la figure 2 est un diagramme montrant les évolutions de la concentration en méthylorange par diverses biomasses réactives (TiO₂/pin, TiO₂/Al₂O₃/pin) comparées aux dégradations obtenues à l'aide d'un dioxyde de titane commercial (Aeroxide TiOP25), et aux dégradations obtenues à l'aide de photocatalyseurs non supportés par une biomasse (TiO₂/Al₂O₃), la fixation du photocatalyseur (TiO₂ ou TiO₂/Al₂O₃) sur une biomasse telle que du pin broyé augmentant les capacités de dégradation du méthylorange ;
- la figure 3a représente les variations d'absorbance pour une biomasse activée (TiO₂/Pin (pin broyé)) avant et après une semaine d'exposition à la lumière naturelle ;

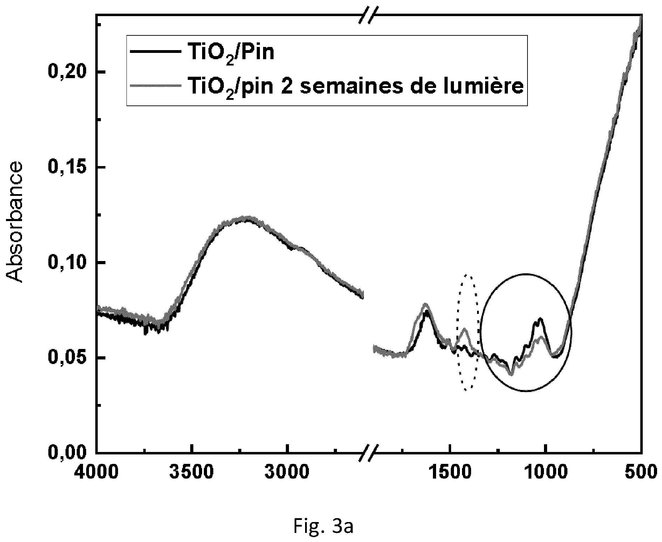

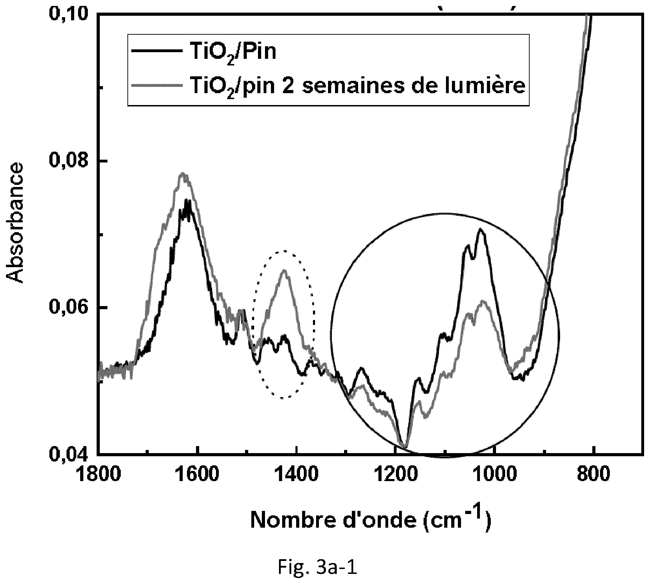

- la figure 3a-1 représente un agrandissement de la figure 3a dans la région 1800-800 cm⁻¹;

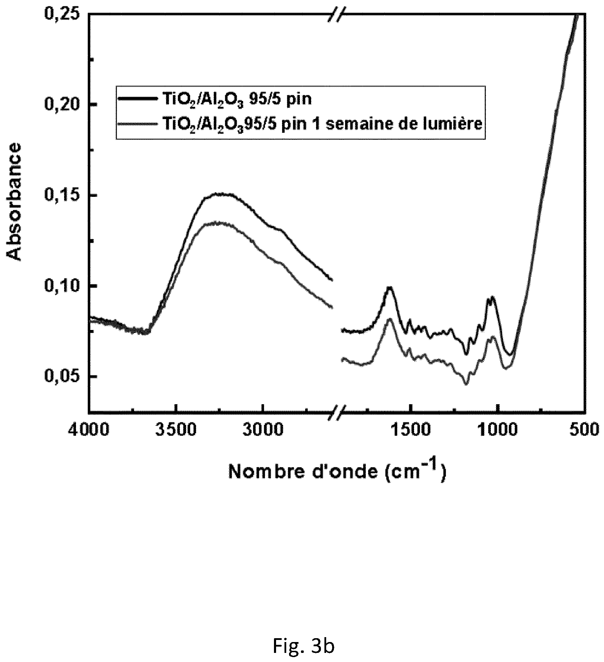

- la figure 3b représente les variations d'absorbance pour une biomasse activée (TiO₂/Al₂O₃ 95/5pin (pin broyé)) avant et après une semaine d'exposition à la lumière ;

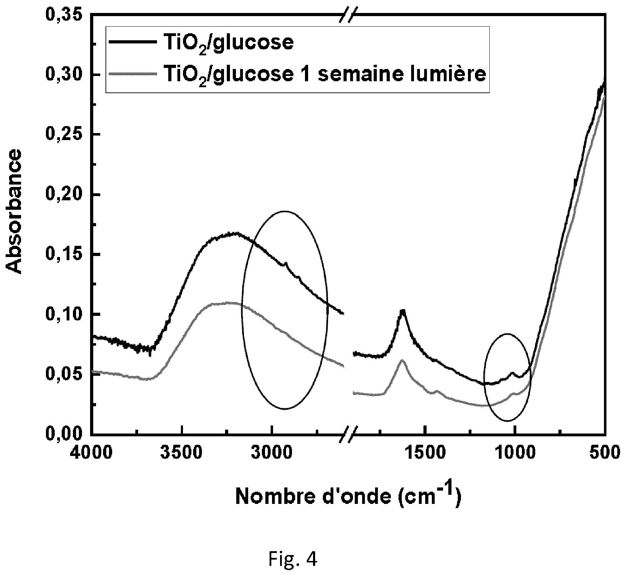

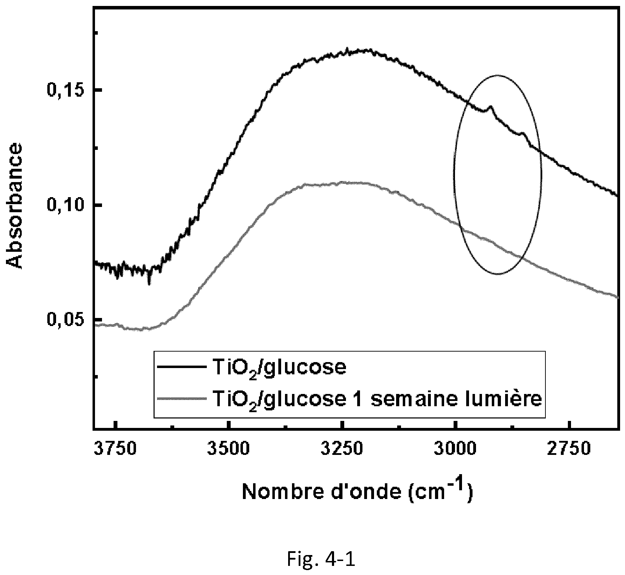

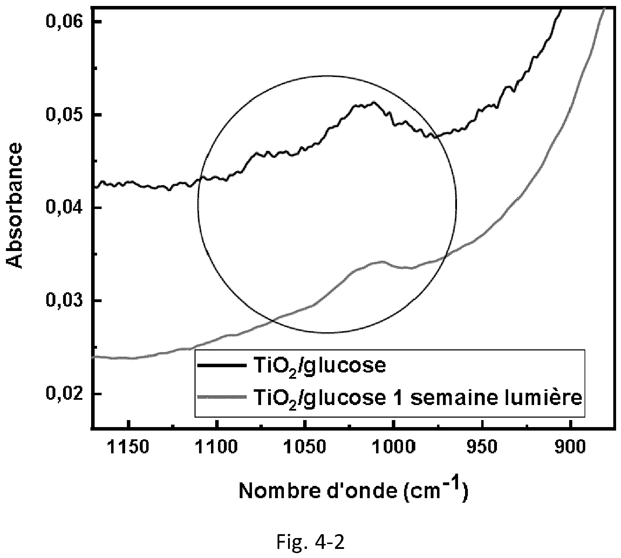

- la figure 4 représente les variations d'absorbance pour du glucose activé, avant et après une semaine d'exposition à la lumière naturelle ;
- la figure 4-1 et la figure 4-2 représentent les agrandissements de la figure 4 dans les régions 3750-2750 cm⁻¹ et 1150-900 cm⁻¹, respectivement ;

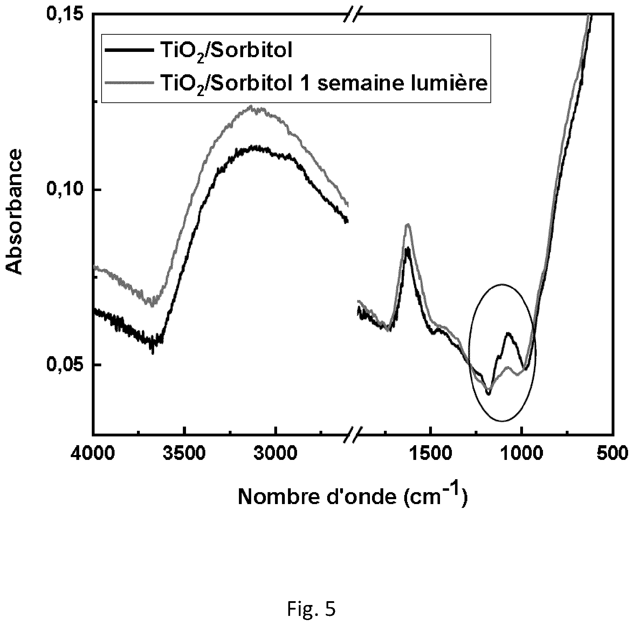

- la figure 5 représente les variations d'absorbance pour le sorbitol, avant et après une semaine d'exposition à la lumière naturelle ;

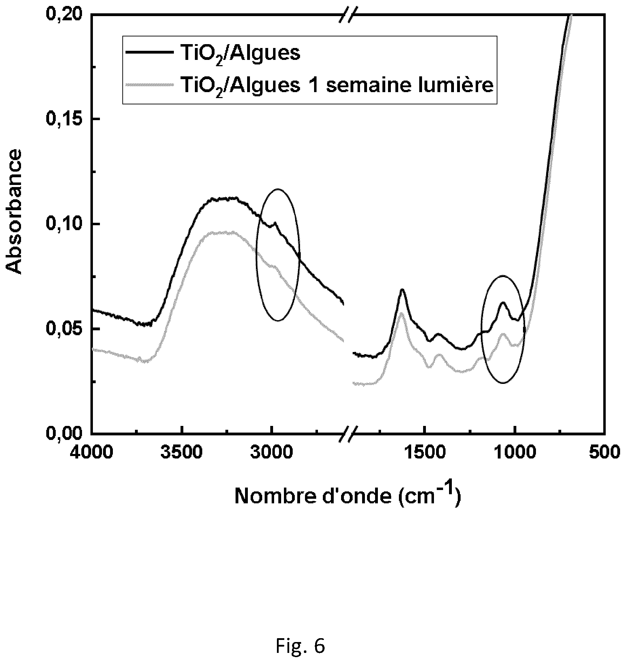

- la figure 6 représente les variations d'absorbance pour une biomasse activée à base d'algue (Pelvetia canaliculata), avant et après une semaine d'exposition à la lumière naturelle ;

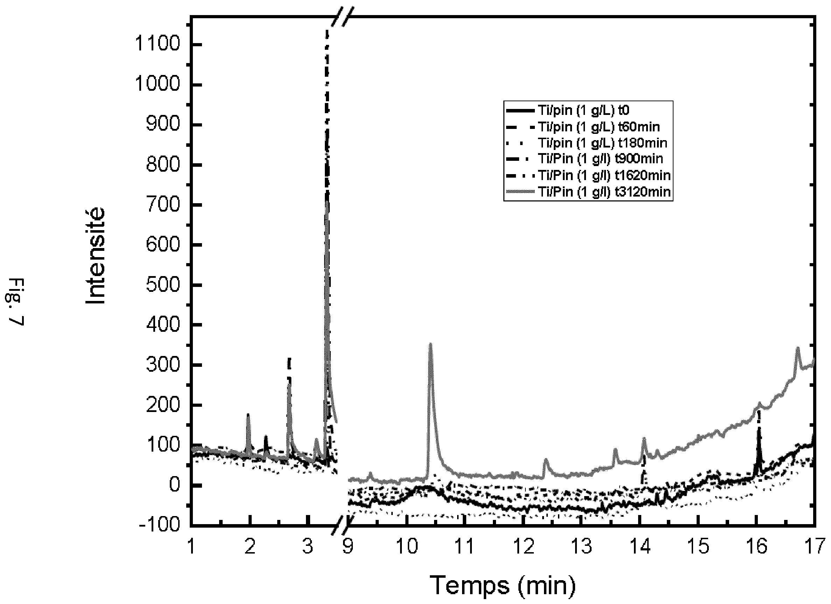

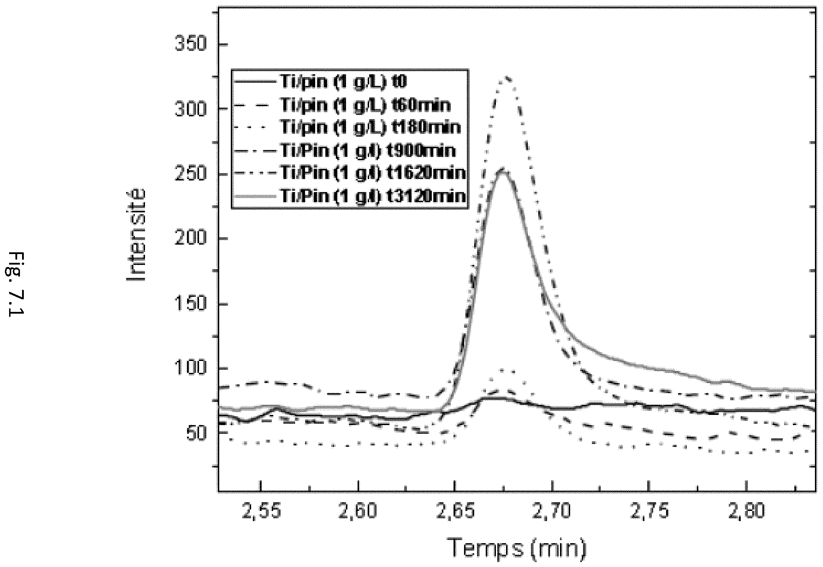

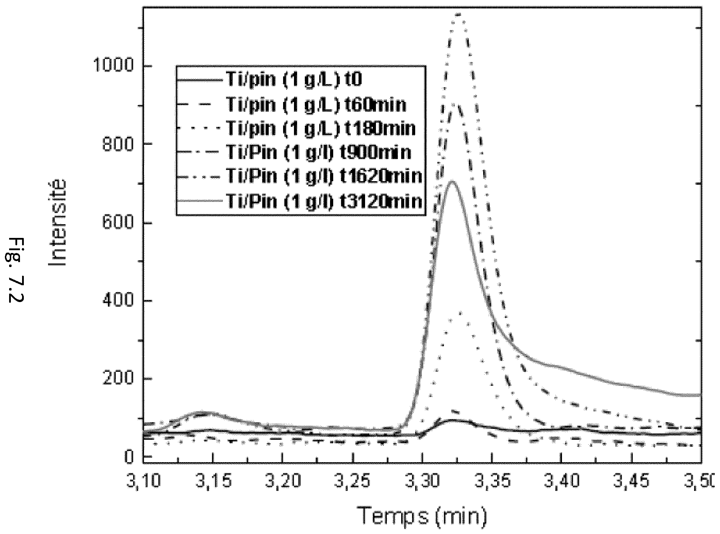

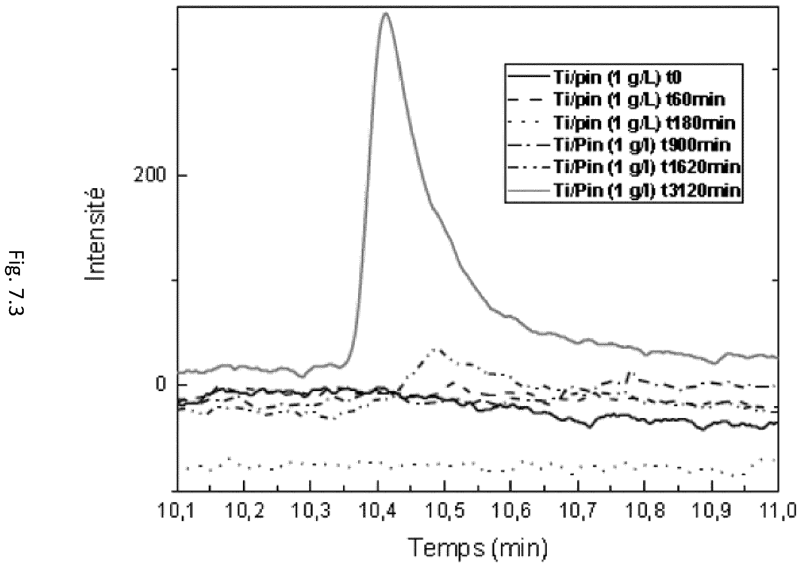

- la figure 7 représente les données de suivi en chromatographie en phase gazeuse avec détecteur à ionisation de flamme, lors d'un traitement de biomasse de pin broyé en solution aqueuse, une concentration de 1g/L de biomasse activée étant mise en solution et exposée à la lumière naturelle ;
- les figures 7-1, 7-2, 7-3 et 7-4 représentent les agrandissements de la figure 7 dans les régions 2,55-2,80 min., 3,10-3,50 min., et 10,1-11 min., respectivement ;

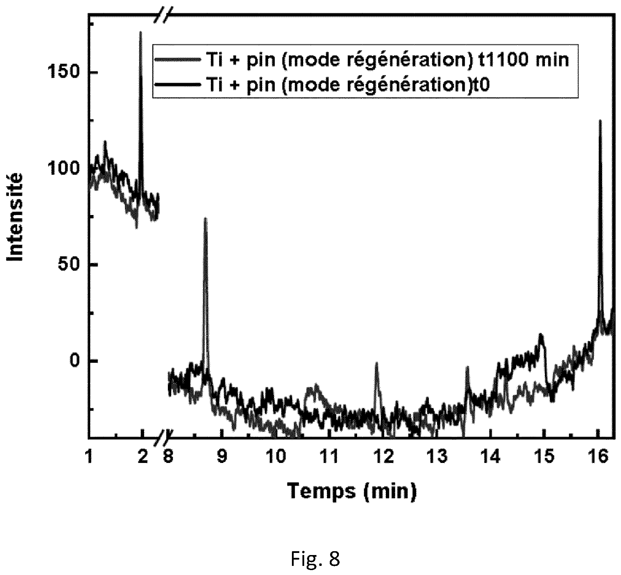

- la figure 8 représente les données de suivi en chromatographie en phase gazeuse avec détecteur à ionisation de flamme, lors d'un traitement de biomasse activée de pin broyé, la biomasse activée supportant du dioxyde de titane recyclé ;

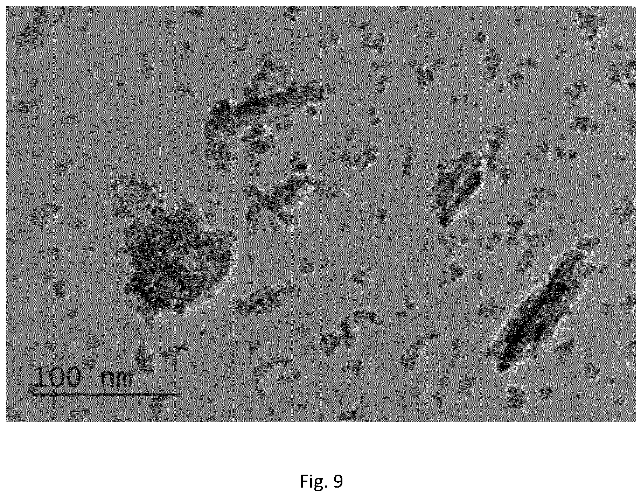

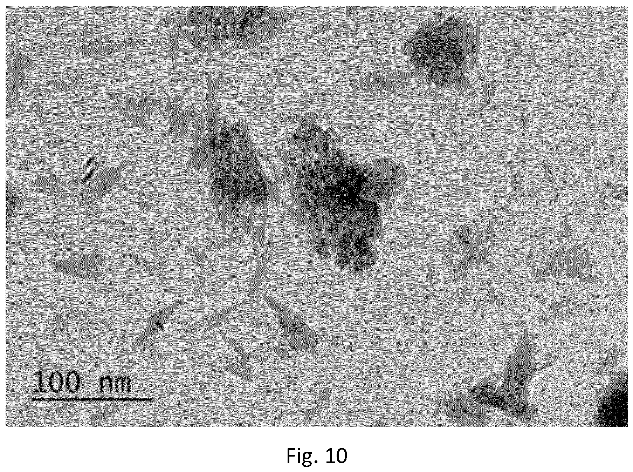

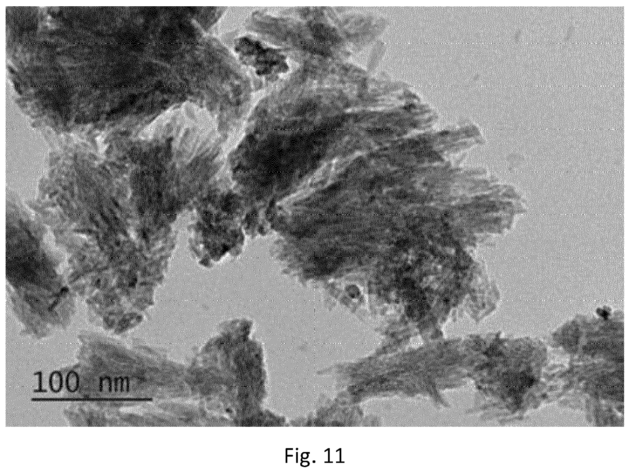

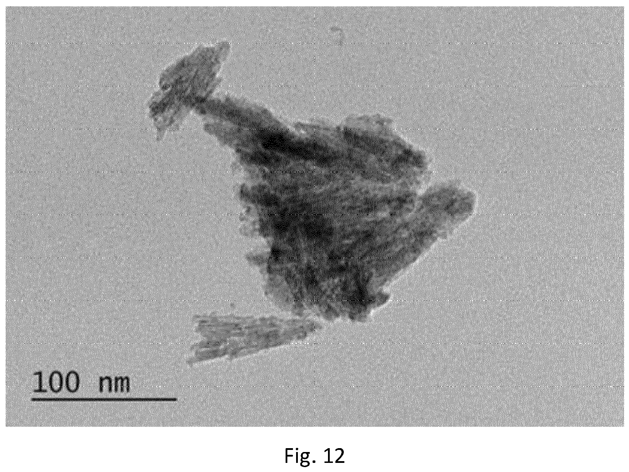

- les figures 9 à 12 sont des images obtenues en microscopie électronique en transmission de matériaux composites TiO₂/biomasse selon l'invention, la figure 9 étant un matériau TiO₂/WO₃/pin broyé, la figure 10 un matériau TIO₂/cellulose, la figure 11 un matériau TiO₂/pin broyé et la figure 12 un matériau TiO₂/glucose

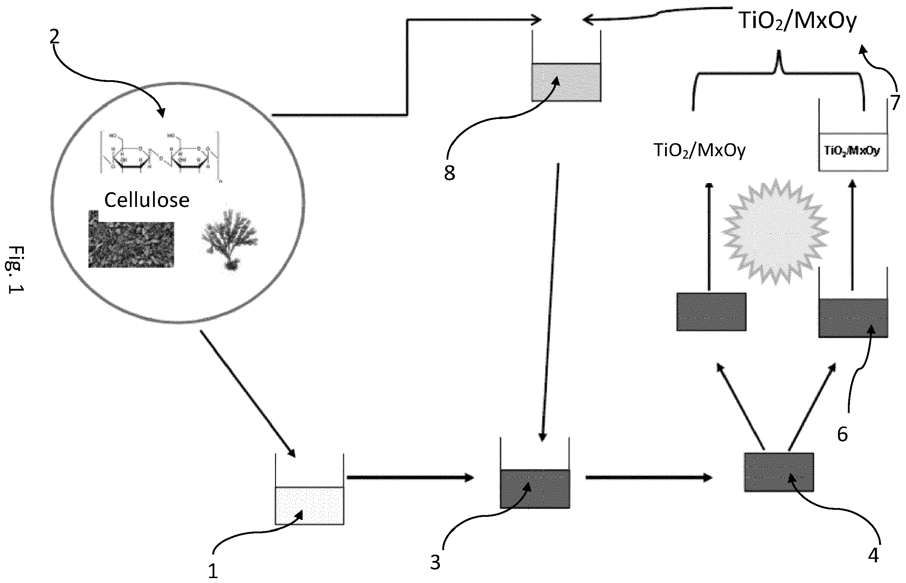

L'on se reporte tout d'abord à la figure 1.

Dans une première étape, dans une solution aqueuse acide, on incorpore un précurseur de titane.

Cette solution aqueuse est par exemple préparée par chauffage d'une solution aqueuse acide à un pH compris entre 0 et 6, à une température comprise entre 20°C et 60°C, par ajout d'acide chlorhydrique.

Dans une mise en œuvre particulière, la solution aqueuse est à pH 0, et est formée par l'ajout dans 50 ml d'eau, de 10g d'acide chlorhydrique à 35%.

La préparation de la solution aqueuse est avantageusement effectuée sans utiliser de tensioactif.

Dans une mise en œuvre, le précurseur de titane est de l'isopropoxyde de titane à 98% (TTIP, tétraisopropyl orthotitanate CAS 546-68-9). L'isopropoxyde de titane (Ti(O-i-Pr)₄) est un alcoxyde de titane.

Dans d'autres mises en œuvre, le précurseur de titane est choisi parmi le titanate de sodium Na₂Ti₃O₇ ou un dérivé.

Dans d'autres mises en œuvre, un mélange de précurseur de titane et d'un oxyde métallique est utilisé. L'oxyde métallique est choisi parmi SiO₂, ZrO₂, Al₂O₃, Fe₂O₃, CeO₂, MgO, ZnO, NiO, Cu₂O, SnO₂, RuO₂, Bi₂O₃, WO₃, V₂O₅, Ag₃PO₄.

Dans une mise en œuvre particulière, l'incorporation du précurseur de titane ou du mélange de précurseur de titane et d'un oxyde métallique est effectuée à 50°C, sous agitation.

De préférence, l'agitation est forte, par exemple agitation magnétique de l'ordre de 800 tr/mn. Cette agitation permet de dissoudre le précipité qui se forme instantanément.

En fonction du pH de la solution acide, le TiO₂ obtenu est sous essentiellement sous forme de brookite (lorsque le pH est voisin de 5), ou de rutile (lorsque le pH est choisi autour de 0-2). Dans une mise en œuvre particulière, l'oxyde métallique est WO₃, et le pH du milieu réactionnel étant compris entre 0 et 5, le TiO₂ obtenu se présentant principalement sous forme anatase.

A la dissolution totale du précipité qui se forme instantanément, un produit issu de la biomasse (support biomasse) est ajouté.

Par exemple, 300mg d'un produit issu de la biomasse est ajouté dans la solution aqueuse acide formée par l'ajout dans 50 ml d'eau de 10g d'acide chlorhydrique à 35%, et contenant le précurseur de titane et éventuellement de l'oxyde métallique.

Dans une mise en œuvre, le produit issu de la biomasse est choisi parmi le groupe comprenant le glucose, le sorbitol, la cellulose monocristalline.

Dans une autre mise en œuvre, le produit issu de la biomasse est du pin broyé, une algue. L'agitation devient alors modérée à l'apparition d'un nouveau précipité.

Dans une mise en œuvre, l'agitation est effectuée à l'aide d'un agitateur magnétique tournant à environ 300 tr/mn.

Pour cette solution de précurseur, la température est maintenue à 50°C pendant 24 heures puis montée à 90°C pendant 24 heures.

Après refroidissement, le milieu réactionnel est filtré sous vide puis séché à l'étuve.

La filtration sous vide permet d'isoler une biomasse activée 4 qui se présente avantageusement sous la forme de support avec des nanocristaux TiO₂, le support étant au moins de taille micrométrique ou millimétrique.

La biomasse activée 4 peut être dégradée de deux manières.

Dans une première voie, la biomasse activée 4 est dégradée en gaz, par mise en contact avec de l'oxygène de l'air sous rayonnement visible (par exemple réalisé par une lampe halogène 500 W 8550 lumen).

Dans une deuxième voie, la biomasse activée 4 est dispersée dans de l'eau 6, à une concentration de l'ordre de 1g/L sous rayonnement visible (par exemple réalisé par une lampe halogène 500 W 8550 lumen).

Lorsque la biomasse activée 4 est altérée, à l'arrêt de l'apparition des composés de dégradation et diminution de leur intensité, le résidu 7 est plongé en solution aqueuse acide.

Dans une mise en œuvre, la solution 8 aqueuse acide est obtenue par mélange de 10g HCl 35% dans 50 mL d'eau, à 90°C.

De la biomasse 2 est alors incorporée au milieu réactionnel sous forte agitation.

Par exemple, 300 mg de biomasse 2 sont incorporés dans la solution 8 aqueuse acide obtenue par mélange de 10g HCl 35% dans 50 mL d'eau, à 90°C.

Après 48 heures, le milieu réactionnel est filtré et la biomasse activée solide obtenue est rincée à l'eau puis séchée à l'étuve, par exemple de 30°C à 50 °C.

La biomasse activée obtenue peut alors subir la photocatalyse telle que décrite ci-dessus (par voie sèche ou aqueuse), le procédé fonctionnant en cycle.

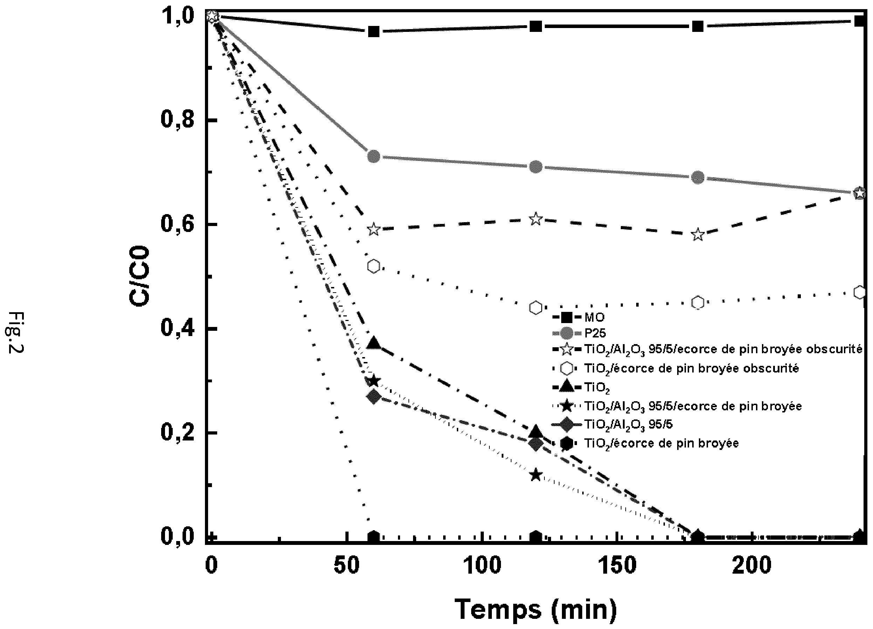

L'on se reporte maintenant à la figure 2.

La dégradation d'un colorant par photocatalyse, par exemple méthylorange ou rhodamine B, peut créer une sensibilisation du dioxyde de titane, le colorant étant un composé conjugué. Ce mécanisme est connu pour servir de modèle pour la photodégradation.

La figure 2 est un diagramme montrant les évolutions de la concentration en méthylorange MO par diverses biomasses activées (TiO₂/pin, TiO₂/Al₂O₃/pin) comparées aux dégradations obtenues à l'aide d'un dioxyde de titane commercial (Aeroxide TiOP25), et aux dégradations obtenues à l'aide de photocatlyseurs non supportés par une biomasse (TiO₂/Al₂O₃), la fixation du photocatalyseur (TiO₂ ou TiO₂/Al₂O₃) sur une biomasse telle que du pin broyé augmentant les capacités de dégradation du méthylorange.

Ainsi qu'il apparaît sur la figure 2, la fixation du photocatalyseur sur une biomasse améliore la dégradation du méthylorange. Les résultats obtenus pour le dioxyde de titane fixé sur du pin broyé sont supérieurs à ceux obtenus avec du dioxyde de titane non fixé, ou du dioxyde de titane commercial. Les résultats obtenus pour le photocatalyseur TiO₂/Al₂O₃ fixé sur du pin broyé sont supérieurs à ceux obtenus avec ce même photocatalyseur non fixé sur biomasse. Les figures 3 à 6 représentent des résultats de mesures d'absorbance lors d'essais de dégradation photocatalytique de biomasse, 40 mg de biomasse activée étant laissés à l'air libre, sous rayonnement naturel.

Les figures 7, 7-1, 7-2, 7-3 représentent les données de suivi en chromatographie en phase gazeuse avec détecteur à ionisation de flamme, lors d'un traitement de biomasse de pin broyé en solution aqueuse, une concentration de 1g/L de biomasse activée étant mise en solution et exposée à la lumière naturelle. L'on constate l'apparition de pics : à 2,6 minutes pour l'acétone (voir la figure 7-1) ; à 3,1 minutes pour le méthanol et à 3,3 minutes pour l'isopropanol (voir la figure 7-2), puis la diminution des pics d'acétone et d'isopropanol, et l'apparition d'autres pics : à 10,4 minutes pour le glyoxal ou glycérol (voir la figure 7-3).

La figure 8 représente les données de suivi en chromatographie en phase gazeuse avec détecteur à ionisation de flamme, lors d'un traitement de biomasse activée de pin broyé, la biomasse activée supportant du dioxyde de titane recyclé. La comparaison des résultats obtenus avant exposition à la lumière naturelle et après exposition de 1100 minutes à la lumière naturelle montre l'atténuation de pics caractéristiques de la biomasse de pin, le dioxyde de titane recyclé conservant ses capacités photocatalytiques.

Le procédé présente de nombreux avantages.

Les oxydes métalliques sont fixés sur des surfaces micrométriques ou millimétriques, sans risque de dissémination dans l'environnement et sans perte de réactivité.

Les supports des oxydes métalliques sont dégradables par photocatalyse.

Les matériaux composites permettent le traitement et la valorisation de produits issus de la biomasse, tels que par exemple les algues, les boues de station d'épuration.

Le procédé permet la production de produits de décomposition valorisables de type alcool (isopropanol, méthanol, éthanol, glycérol) ou autres (acétone, acide acétique...) ou encore biogaz (hydrogène, méthane, syngas).

Le procédé utilise la lumière naturelle, la lumière visible et les UV

Le procédé est intégré in situ, toutes les étapes du procédé peuvent être réalisées sur un seul site.

Le procédé n'utilise pas de solvant et les températures de travail sont modérées.

## Revendications

1. Procédé de préparation d'un support photocatalyseur biomasse avec des nanocristaux TiO₂/MₓO_{y}, de taille au moins nanométrique et actif en photocatalyse au moins dans le domaine du visible,
comprenant les sous-étapes suivantes :
a) préparation et chauffage d'une solution aqueuse d'acide chlorhydrique à un pH donné, compris entre 0 et 6, et sans tensioactif,
b) ajout à la solution (1) aqueuse acide d'un précurseur d'oxyde de titane, ou d'un mélange d'un précurseur d'oxyde de titane TiO₂ et d'au moins un autre précurseur d'un autre oxyde MₓO_{y}, composé de 80% à 100 % en moles de TiO₂ et de 0% à 20 % en moles d'un autre oxyde métallique ou semi-métallique MₓO_{y}, un précipité se formant alors, et agitation du milieu réactionnel (3) aqueux acide, de façon à dissoudre le précipité formé ;
c) immersion d'un support biomasse (2) dans le milieu réactionnel aqueux acide pour condenser les précurseurs du milieu réactionnel aqueux acide sur sa surface, qui s'accrochent par liaisons covalentes sur cette surface,
d) chauffage du milieu réactionnel (3) aqueux acide,
le support biomasse (2) permettant de faire cristalliser les précurseurs d'oxyde de titane, ou du mélange du précurseur d'oxyde de titane et d'au moins un autre précurseur de l'autre oxyde métallique ou semi-métallique à sa surface, les précurseurs cristallisants, une fois accrochés à la surface du support;
e) récupération du support biomasse (4) avec les nanocristaux TiO₂/ MₓO_{y}, accrochés par liaisons covalentes au support biomasse.

2. Procédé selon la revendication 1, dans lequel le précurseur de titane est choisi parmi le groupe comprenant l'isopropoxyde de titane, le titanate de sodium Na₂Ti₃O₇ ou un dérivé.

3. Procédé selon l'une des revendications 1 ou 2, dans lequel l'oxyde métallique est choisi parmi le groupe comprenant SiO₂, ZrO₂, Al₂O₃, Fe₂O₃, CeO₂, MgO, CuO, NiO, Cu₂O, SnO₂, RuO₂, Bi₂O₃, WO₃, V₂O₅, Ag₃PO₄.

4. Procédé selon l'une des revendications 1 à 3, dans lequel les étapes sont réalisées à l'air libre sans aucun co-solvant organique.

5. Procédé selon l'une des revendications 1 à 4, dans lequel dans l'étape a),
- le pH est choisi égal à 5, de façon à obtenir des nanocristaux sur le support biomasse ayant une forme cristalline brookite stable,
- ou le pH est entre 0 et 2 de façon à obtenir des nanocristaux sur le support biomasse ayant une forme cristalline rutile.

6. Procédé selon l'une des revendications 1 à 5, dans lequel la première étape a) d'ajout d'un précurseur de titane est réalisée avec ajout d'un oxyde métallique WO₃, le pH du milieu réactionnel étant compris entre 0 et 5.

7. Procédé selon l'une des revendications 1 à 6, dans l'étape de chauffage a) de la solution aqueuse d'acide chlorhydrique, la température de chauffage est comprise entre 20°C et 60°C.

8. Procédé selon l'une des revendications 1 à 7, dans lequel l'étape de chauffage d) du milieu réactionnel aqueux acide comprenant le support biomasse est réalisée entre 30°C et 100°C.

9. Procédé selon l'une des revendications 1 à 8, dans lequel l'étape de chauffage d) du milieu réactionnel (3) aqueux acide comprend un chauffage à une température comprise entre 30°C et 60°C pendant une première durée donnée, et un chauffage à une température comprise entre 50°C et 90°C pendant une deuxième durée donnée, la première durée étant de plusieurs heures, la deuxième durée étant de plusieurs heures.

10. Support photocatalyseur biomasse (4), actif en photocatalyse au moins dans le domaine du visible et de taille au moins nanométrique avec des nanocristaux TiO₂/ MₓO_{y}, accrochés à sa surface par liaisons covalentes, réalisé par le procédé selon l'une des revendications 1 à 9, ces nanocristaux étant composés de 80% à 100 % en moles de TiO₂ et de 0% à 20 % en moles d'un autre oxyde métallique ou semi-métallique MₓO_{y}.

11. Support photocatalyseur biomasse TiO₂/ MₓO_{y} selon la revendication 10, dans lequel la biomasse (2) est choisie dans le groupe comprenant : le glucose, le sorbitol, la cellulose monocristalline.

12. Support photocatalyseur biomasse TiO₂/ MₓO_{y} selon l'une des revendications 10 à 11, dans lequel la biomasse (2) est choisie parmi le groupe comprenant les algues et le bois.

13. Support photocatalyseur biomasse TiO₂/ MₓO_{y} selon l'une des revendications 9 à 12, de taille micrométrique ou millimétrique ou centimétrique ou supérieure.

14. Procédé de dégradation de supports photocatalyseurs biomasse TiO₂/ MₓO_{y}, à partir d'un premier support photocatalyseur biomasse réalisé selon l'une des revendications 9 à 13,
le procédé comprenant :
- une étape f) de dégradation photocatalytique au moins dans le domaine du visible, du premier support photocatalyseur de biomasse (4) avec des nanocristaux TiO₂/ MₓO_{y}, pour obtenir un résidu (7) et des produits de décomposition ;
- une étape g) de traitement en solution aqueuse (8) acide du résidu (7), pour obtenir une solution de photocatalyseur recyclée avec des nanoparticules TiO₂/ MₓO_{y} réactives pour le greffage, formant un nouveau milieu réactionnel aqueux acide,
les nanoparticules TiO₂/ MₓO_{y} réactives du résidu étant issues du premier support photocatalyseur biomasse dégradé en produits de décomposition ;
- une étape h) d'ajout à la solution de photocatalyseur recyclée, d'un nouveau support de biomasse (2) ;
- une étape i) de chauffage du nouveau milieu réactionnel aqueux acide,
- une étape j) de séchage, pour former un nouveau support photocatalyseur biomasse (4) avec des nanoparticules TiO₂/ MₓO_{y}, accrochées par liaison covalente en surface, le nouveau support photocatalyseur biomasse (4) étant actif en photocatalyse au moins dans le domaine du visible.

15. Procédé de dégradation selon la revendication 14, dans lequel :
- le nouveau support photocatalyseur biomasse (4) avec nanoparticules TiO₂/ MₓO_{y}, issues de l'étape j), est dégradé lors d'une nouvelle étape f),
- le procédé de dégradation de la biomasse étant réalisé à nouveau dans des nouvelles étapes g) à j) pour obtenir un nouveau support photocatalyseur biomasse (4) avec des nanoparticules TiO₂/ MₓO_{y} issues de l'étape j),
qui est à nouveau dégradé lors d'une autre nouvelle étape f) et ainsi de suite,
le procédé fonctionnant suivant un cycle permettant de récupérer les nanoparticules TiO₂/ MₓO_{y} du résidu (7) qui sont réactives pour le greffage, et qui sont accrochées par liaisons covalentes à chaque nouveau support photocatalyseur biomasse (4), ajouté dans le milieu réactionnel (3) aqueux acide les contenant.

16. Procédé de dégradation selon l'une des revendications 14 à 15, dans lequel l'étape f) de dégradation photocatalytique est réalisée en lumière naturelle ou sous rayonnement visible.

17. Procédé de dégradation selon l'une des revendications 14 à 16, dans lequel l'étape de dégradation photocatalytique est réalisée par mise au contact avec l'oxygène de l'air, à pression atmosphérique.

18. Procédé de dégradation selon l'une des revendications 14 à 17, dans lequel les produits de décomposition sont de type alcool.

19. Procédé de dégradation selon l'une des revendications 14 à 18, dans lequel les produits de décomposition sont choisis dans la liste suivante : acétone, isopropanol, méthanol, glycérol, acide acétique, glyoxal, éthanol

20. Procédé de dégradation selon l'une des revendications 14 à 19, dans lequel les produits de décomposition comprennent des biogaz tels qu'hydrogène et/ou méthane

21. Procédé de dégradation selon l'une des revendications 14 à 20, dans lequel les produits de décomposition sont réalisés sans agitation de la solution aqueuse lors de l'étape f).

22. Nanoparticules TiO₂ /MₓO_{y} réactives pour le greffage, et aptes à s'accrocher par liaisons covalentes à un support photocatalyseur pour le rendre actif en photocatalyse au moins dans le domaine du visible, issues du résidu obtenu par le procédé de dégradation définie selon l'une des revendications 14 à 21.
